Europäisches Patentamt

**European Patent Office**

**Office européen des brevets**

(19)

(11) Numéro de publication : **0 195 243**
**B1**

(12) **FASCICULE DE BREVET EUROPÉEN**

(45) Date de publication du fascicule du brevet :
**11.10.89**

(21) Numéro de dépôt : **86101817.4**

(22) Date de dépôt : **13.02.86**

(51) Int. Cl.⁴ : **A 23 K 1/14, A 23 K 1/00,**
**A 23 L 1/185, C 12 C 5/02**

(54) **Procédé pour la production d'aliments composés concentrés pour l'élevage animal et produits obtenus.**

(30) Priorité : **21.02.85 IT 8551585**

(43) Date de publication de la demande :
**24.09.86 Bulletin 86/39**

(45) Mention de la délivrance du brevet :
**11.10.89 Bulletin 89/41**

(84) Etats contractants désignés :
**AT BE CH DE FR GB IT LI LU NL SE**

(56) Documents cités :
**AT--B-- 131 603**
**DE--B-- 2 418 381**
**FR--A-- 1 325 658**

(73) Titulaire : **BIBOR s.n.c. di Berlaffa Irma & C.**
**Via Caltrano, 51**
**I-36013 Plovene Rocchette (Vicenza) (IT)**

(72) Inventeur : **Bianco, Giuseppe**
**Via Trento, 27**
**I-36010 Zane' (Vicenza) (IT)**
Inventeur : **Roma, Iles**
**Via Bessé, 31**
**I-36010 Chiuppano (Vicenza) (IT)**

(74) Mandataire : **Bettello, Luigi, Dott. Ing.**
**Via Col d'Echele, 25**
**I-36100 Vicenza (IT)**

## Description

La présente invention a pour objet un procédé pour la production d'aliments concentrés pour l'élevage des animaux domestiques, à base d'orge, de riz et d'avoine, ces trois céréales étant soumises à des opérations répétées de torréfaction de façon à obtenir une carbonisation pratiquement complète.

L'invention a également pour objet le produit obtenu par mise en oeuvre du procédé sus-mentionné, lequel produit est nouveau en ce qui concerne l'élevage animal.

On sait que la flore bactérienne contenue dans l'appareil digestif des animaux d'élevage et notamment des dindes, des lapins, des poulets, des poules de ponte, des veaux, des porcs et bétail similaire provoque souvent des dysenteries avec formation de gaz et de liquides ; ces dysenteries impliquent nécessairement une diminution sensible de la croissance de l'animal qui peut parfois aller jusqu'au dépérissement organique et même jusqu'à la mort.

Les essais effectués par la Demanderesse ont permis de vérifier qu'à l'aide de dosages particuliers du mélange des différentes céréales citées ci-dessus et grâce à la carbonisation pratiquement complète de celles-ci obtenue par torréfactions répétées, il est possible de réaliser des additifs qui, ajoutés aux produits usuels d'alimentation administrés à l'animal, permettent une réduction sensible de la formation de la flore bactérienne intestinale et une diminution du volume des gaz et de la quantité des liquides qui se forment à l'intérieur du système digestif dudit animal, ce qui a pour effet de supprimer de manière pratiquement totale le risque de dysenterie préjudiciable à la croissance.

Il convient d'observer qu'il s'agit ici non pas d'un médicament, mais bien d'un additif destiné à être ajouté à l'alimentation normale de l'animal afin d'absorber les gaz et les liquides comme on l'a indiqué plus haut.

Un autre avantage présenté par une alimentation comportant des additifs suivant l'invention est dû au fait que le fort pourcentage d'amides contenu dans ceux-ci tend à protéger les tissus intestinaux qui sont souvent susceptibles de saigner, en participant ainsi à la remise en état de ces parois et en améliorant de la sorte la digestion de l'animal.

On indiquera sur ce point que les amides améliorent le tissu intestinal tandis que les fibres alimentaires participent à la digestion et à l'assimilation des aliments.

A titre d'exemple non limitatif, on donnera ci-après les pourcentages des constituants du mélange qui se sont révélés les plus favorables :

| riz | 2 % |
| avoine | 2 % |
| orge | 96 % |

Il va cependant de soi que ces pourcentages peuvent varier dans une mesure sensible.

## Revendications

1. Procédé pour la production d'aliments composés concentrés pour l'élevage animal, notamment pour l'alimentation des dindes, lapins, poulets, poules de ponte, veaux, porcs et similaires, caractérisé en ce qu'il consiste à procéder à des opérations répétées de torréfaction d'orge, de riz et d'avoine, de façon à arriver à une carbonisation pratiquement complète de ceux-ci et de permettre, après mélange dans des proportions appropriées, la réalisation de composés concentrés propres à constituer des additifs aux aliments utilisés pour les animaux.

2. Aliment composé concentré pour l'élevage animal obtenu par mise en oeuvre du procédé suivant la revendication 1, caractérisé en ce qu'il est constitué par un mélange d'orge, de riz et d'avoine soumis à des torréfactions répétées jusqu'à l'obtention d'une carbonisation pratiquement complète, cet aliment étant propre à être utilisé en tant qu'additif aux aliments usuels en vue de l'absorption des gaz et des liquides susceptibles de se former à l'intérieur de l'intestin de l'animal.

3. Aliment suivant la revendication 2, caractérisé en ce que le mélange renferme 2 % de riz, 2 % d'avoine et 96 % d'orge.

## Claims

1. Process for the production of concentrated feedstuff components for animal husbandry, more particularly for feeding turkeys, rabbits, chickens, laying hens, calves, pigs and similar, characterised in that it consists in carrying out repeated roasting operations on barley, rice and oats, so as to attain virtually complete carbonisation of the latter and to enable, after mixing in appropriate proportions, the production of concentrated components suitable for constituting additives to usual feedstuffs used for the animals.

2. Concentrated feedstuff component for animal husbandry obtained by carrying out the process according to claim 1, characterised in that it is made up of a mixture of barley, rice and oats subjected to repeated roasting operations until virtually complete carbonisation is obtained, said feedstuff being suitable for use as an additive to usual feedstuffs with a view to absorbing gases and liquids liable to form inside the animal's intestine.

3. Feedstuff according to claim 2, characterised in that the mixture contains 2 % rice, 2 % oats and 96 % barley.

## Patentansprüche

1. Verfahren zur Herstellung von konzentrierten zusammengesetzten Nahrungsmitteln für die Aufzucht von Tieren, insbesondere für die Ernährung von Truthähnen, Kaninchen, Brathühnern, Legehenen, Kälbern, Schweinen und ähnlichen Tieren, dadurch gekennzeichnet, daß es daraus besteht wiederholte Vorgänge des Röstens von Gerste, Reis und Hafer derart vorzunehmen, daß eine praktisch vollständige Karbonisierung von diesen erreicht wird und nach Mischung in geeigneten Verhältnissen die Herstellung von konzentrierten Bestandteilen ermöglicht wird, die geeignet sind Zusätze zu herkömmlichen Nahrungsmitteln zu bilden, die für die Tiere verwendet werden.

2. Konzentriertes zusammengesetztes Nahrungsmittel für die Aufzucht von Tieren, erhalten durch die Durchführung des Verfahrens nach Anspruch 1, dadurch gekennzeichnet, daß es gebildet ist durch eine Mischung aus Gerste, Reis und Hafer, die wiederholtem Rösten bis zur Erreichung einer praktisch vollständigen Karbonisierung unterworfen wird, wobei dieses Nahrungsmittel geeignet ist als Zusatz zu den herkömmlichen Nahrungsmitteln verwendet zu werden, für die Absorption von Gasen und Flüssigkeiten, die sich im Inneren des Darmes des Tieres bilden können.

3. Nahrungsmittel nach Anspruch 2, dadurch gekennzeichnet, daß die Mischung 2 % Reis, 2 % Hafer und 96 % Gerste einschließt.